# EUROPEAN PATENT SPECIFICATION

(11) **EP 3 197 152 B1**
(45) Date of publication and mention of the grant of the patent: **05.12.2018**
(21) Application number: 15838327.3
(22) Date of filing: 19.08.2015
(51) Int. Cl.: H04N 7/15, H04M 3/56, H04M 3/38, H04L 29/06, H04M 3/51, H04M 3/58

(54) **TRANSMISSION CONTROL SYSTEM, COMMUMICATIONS TERMINAL, COMMUNICATION SYSTEM, TRANSMISSION CONTROL METHOD, AND PROGRAM**
ÜBERTRAGUNGSSTEUERUNGSSYSTEM, KOMMUNIKATIONSENDGERÄT, KOMMUNIKATIONSSYSTEM, ÜBERTRAGUNGSSTEUERUNGSVERFAHREN UND PROGRAMM
SYSTÈME DE COMMANDE D'ÉMISSION, TERMINAL DE COMMUNICATIONS, SYSTÈME DE COMMUNICATIONS, PROCÉDÉ DE COMMANDE D'ÉMISSION ET PROGRAMME

(30) Priority: 04.09.2014 JP 2014179971
(43) Date of publication of application: 26.07.2017
(73) Proprietor: Ricoh Company, Ltd., Tokyo 143-8555 (JP)
(72) Inventor: INOUE, Takeru, Tokyo 143-8555 (JP)
(74) Representative: Schwabe - Sandmair - Marx
(86) International application number: PCT/JP2015/073249
(87) International publication number: WO 2016/035551

(56) References cited:
- EP-A1- 1 892 934
- WO-A1-2014/031408
- WO-A1-2015/118367
- JP-A- 2011 103 685

## Description

### [Technical Field]

An aspect of the following disclosure relates to a technology for controlling transmission of content data between communications terminals.

### [Background Art]

Communications systems that implement conversations or discourses via videoconferencing or telephone through communications networks including the Internet, dedicated lines, etc., have been widely spread along with demands for reduction in cost and time of those involved in business trips. Such communications systems are capable of implementing conversations or discourses via videoconferencing or telephone by allowing, upon starting communications between two or more communications terminals, these communications terminals to mutually transmit or receive content data such as image data and sound data between the communications terminals (see Patent Document 1).

There is disclosed an example of a technology in which such a communications system is used in the call center. In this technology, a call center apparatus selects an operator terminal that is currently available to receive an incoming call in response to a connection request from a certain videophone to establish a communications channel for videos and sound between the selected operator terminal and the videophone (see Patent Document 2).

In the disclosed technology, when the operator terminal finishes communicating with the videophone and becomes ready to receive an incoming call, the operator terminal is switched to a new communications channel to start communications with a new videophone terminal.

Another example is disclosed in EP1892934, where a called party can screen a call by receiving audio and/or video prior to answering. Only when the call is answered, the calling party also receives audio and/or video.

Yet another example is disclosed in WO2015118367, where a video image of the calling party is received before answering the video call. This allows the called party to visually screen the calling party. After answering, a full duplex video call is set up.

### [Related-Art Documents]

### [Patent Documents]

[Patent Document 1] Japanese Unexamined Patent Application Publication No. 2012-191598
[Patent Document 2] Japanese Unexamined Patent Application Publication No. 2005-064860

### [Summary of the Invention]

### [Problem to be Solved by Invention]

However, when telephone or videophone conversation is implemented by such a communications system, a conversation request destination (i.e., the operator) is not able to grasp the situation of the conversation request source (i.e., a user of the videophone), thereby failing to prepare for conversation with the conversation request source in accordance with a situation of the conversation request source.

### [Means to Solve the Problem]

According to an aspect of the disclosure, a transmission control system includes a transmission controller configured to control transmission of content data in a session for transmitting the content data between a plurality of communications terminals. In the session, when the transmission controller controls the transmission of the content so as not to transmit the content data from the first communications terminal to at least the second communications terminal of the communications terminals while transmitting the content data from each of the communications terminals to the first communications terminal, the transmission controller controls the transmission of the content data to transmit the content data from the first communications terminal to the second communications terminal based on a request from the second communications terminal.

### [Advantageous Effect of the Invention]

According to an aspect of the disclosed information transmission system, in a case where a telephone conversation is implemented by the communications system, it is possible to transmit information about a situation of a conversation request source (e.g., the user of the videophone) to a communications terminal of a conversation request destination (e.g., the operator) before starting a telephone conversation. As a result, it is possible for the conversation request destination to prepare for the telephone conversation with the conversation request source in accordance with the reported situation of the phone conversation request source.

### [Brief Description of Drawings]

FIG. 1 is a schematic diagram illustrating a communications system;
FIG. 2 is an external view illustrating a communications terminal;
FIG. 3 is a hardware configuration diagram of the communications terminal;
FIG. 4 is a hardware configuration diagram of a communications management system, a relay apparatus, a program providing system, and a maintenance system;
FIG. 5 is a software configuration diagram of the communications terminal;
FIG. 6 is a functional block diagram illustrating a communications management system and each of the terminals that constitute the communications system;
FIG. 7A is a schematic diagram illustrating an authentication management table managed by the communications management system;
FIG. 7B is a schematic diagram illustrating a terminal management table managed by the communications management system;
FIG. 7C is a schematic diagram illustrating an application availability management table managed by the communications management system;
FIG. 7D is a schematic diagram illustrating a session management table managed by the communications management system;
FIG. 7E is a schematic diagram illustrating a group information management table managed by the communications management system;
FIG. 7F is a schematic diagram illustrating a standby information management table managed by the communications management system;
FIG. 8 is a sequence diagram illustrating a process of a preparation stage for starting a conversation over the phones between communication terminals;
FIG. 9 is a diagram illustrating a screen example of an application list;
FIG. 10 is a sequence diagram illustrating a process of requesting attendance at a content data session;
FIG. 11A is a schematic diagram illustrating transmission and reception of various types of information in the communications system;
FIG. 11B is a schematic diagram illustrating transmission and reception of various types of information in the communications system;
FIG. 12 is a diagram illustrating an example of a reception screen;
FIG. 13 is a sequence diagram illustrating a process of requesting transmission of content data;
FIG. 14A is a schematic diagram illustrating transmission and reception of various types of information in the communications system;
FIG. 14B is a schematic diagram illustrating transmission and reception of various types of information in the communications system;
FIG. 15A is a diagram illustrating an example of a videoconference screen; and
FIG. 15B is a diagram illustrating an example of a videoconference screen.

### [Mode for Carrying Out the Invention]

The following illustrates an embodiment of the present invention with reference to accompanying drawings.

### OVERALL CONFIGURATION OF COMMUNICATIONS SYSTEM 1

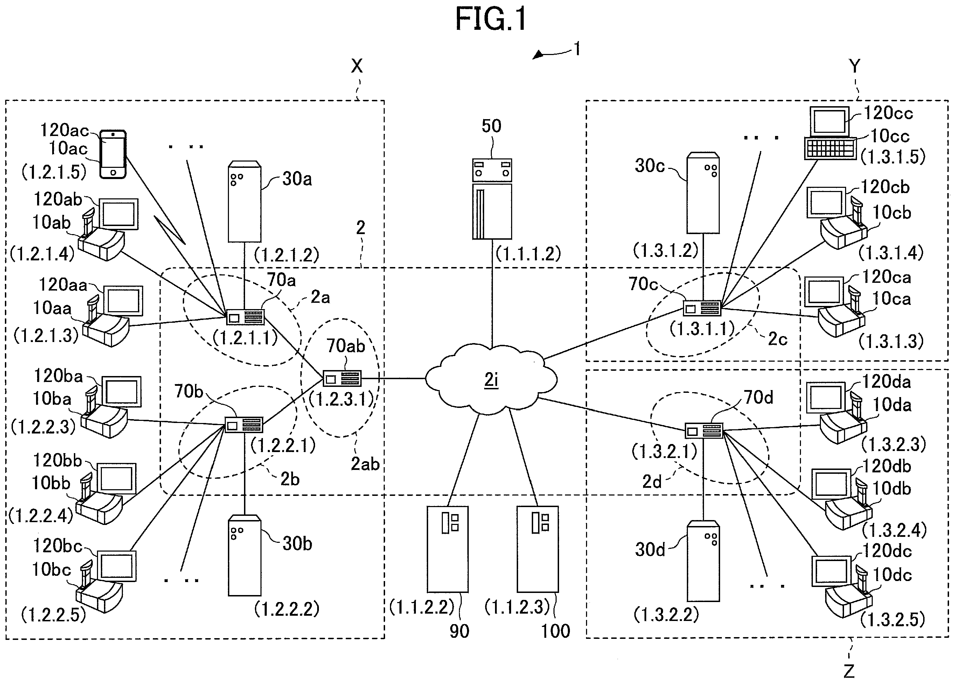

FIG. 1 is a schematic diagram illustrating a communications system according to an embodiment. As illustrated in FIG. 1, the communications system 1 is configured to include two or more communications terminals (10aa, 10ab, ......), respective displays (120aa, 120ab, ......) of the communications terminals (10aa, 10ab, ......), two or more relay apparatuses (30a, 30b, 30c, 30d and 30e), a communications management system 50, a program providing system 90, and a maintenance system 100. The communications system 1 may be able to implement videoconferencing or the like between remote locations by communicating image data and sound data as examples of content data in the conversation. Note that two or more routers (70a, 70b, 70c, 70d and 70ab) are configured to select an optimal one of routes for the content data.

The communications terminals (10aa, 10ab, 10ac, ......), the relay apparatus 30a, and the router 70a are coupled to one another via a LAN 2a such that the communications terminals (10aa, 10ab, 10ac, ......), the relay apparatus 30a, and the router 70a may be able to perform communications with one another. The communications terminals (10ba, 10bb, 10bc, ......), the relay apparatus 30b, and the router 70b are connected to one another via a LAN 2b such that the communications terminals (10ba, 10bb, 10bc, ......), the relay apparatus 30b, and the router 70b may be able to perform communications with one another. The LAN 2a and LAN 2b are coupled via a dedicated line 2ab including a router 70ab to perform communications with one another. The LAN 2a and LAN 2b and dedicated line 2ab are constructed within a predetermined area X. For example, the predetermined area X may be China, the LAN 2a may be constructed within a Beijing Office, and the LAN 2b may be constructed within a Shanghai Office.

The communications terminals (10ca, 10cb, 10cc, ......), the relay apparatus 30c, and the router 70c are coupled to one another via a LAN 2c such that the communications terminals (10ca, 10cb, 10cc, ......), the relay apparatus 30c, and the router 70c may be able to perform communications with one another. The LAN 2c is constructed within a predetermined area Y. The predetermined area Y may be Japan, and the LAN 2c may be constructed within a Tokyo Office.

The communications terminals (10da, 10dd, 10dc, ......), the relay apparatus 30d, and the router 70d are coupled to one another via a LAN 2d such that the communications terminals (10da, 10dd, 10dc, ......), the relay apparatus 30d, and the router 70d may be able to perform communications with one another. The LAN 2d is constructed within a predetermined area Z. The predetermined area Z may be the United States of America (USA), and the LAN 2d may be constructed within a Washington, D.C. Office.

The areas X, Y, and Z are coupled via the Internet 2i from the routers 70ab, 70c and 70d, respectively, such that the areas X, Y, and Z may be able to perform communications with one another. Note that a call center is situated inside the Washington, D.C. Office in the area Z. The communications terminals 10 may be coupled to communications terminals (10da, 10db, 10dc, ......) in the call center so as to receive a reception service.

In the following description, a "communications terminal" may be simply referred to as a "terminal", and a "communications management system" may be simply referred to as a "management system". Likewise, any one of the terminals (10aa, 10ab, ......) is referred to as a "terminal 10", any one of the displays (120aa, 120ab, ......) is referred to as a "display 120", and any one of the relay apparatuses (30a, 30b, and 30c) is referred to as a "relay apparatus 30". Note also that, any one of the routers (70a, 70b, 70c, 70d and 70ab) is referred to as a "router 70".

The management system 50, the program providing system 90, and the maintenance system 100 are coupled to the Internet 2i. The management system 50, the program providing system 90, and the maintenance system 100 may be installed in the areas X, Y, and Z, or may be installed in areas other than the areas X, Y, and Z.

Note that in the communications system 1, the LAN 2a, the LAN 2b, the dedicated line 2ab, the Internet 2i, the LAN 2c, and the LAN 2d form the communications network 2 of the embodiment. The communications network 2 not only includes wired communications but partially includes wireless communications such as Wireless Fidelity (Wi-Fi), Blue-tooth (registered trademark), and mobile telephone networks.

In FIG. 1, a combination of four numbers provided beneath each of the terminals 10, each of the relay apparatuses 30, the management system 50, each of the routers 70, the program providing system 90, and the maintenance system 100 simply represents an IP address of a general IPv4. For example, the IP address of the terminal 10aa is "1.2.1.3". The IP address may be IPv6 instead of IPv4; however, the IPv4 is employed in this specification for simplifying the illustration.

The terminals 10 illustrated in FIG. 1 implement users' telephone conversation by transmission and reception of content data including sound data and image data upon activation of the later-described videoconferencing application 1031. The terminals 10 are configured to transmit and receive telephone conversation data utilizing predetermined communications systems including a call control system for coupling to and decoupling from a communications destination and an encoding system for IP packaging the communications data. Note that in the following description, application software may be called an "application" or "applications".

Examples of the call control system include (1) the session initiation protocol (SIP), (2) H.323, (3) an eXtended SIP protocol, (4) instant messaging protocols and (5) SIP for instant messaging, (6) Internet Relay Chat (IRC) protocol, and (7) extended instant messaging protocols. Of these protocols described above, (4) the instant messaging protocols may be (4-1) Extensible messaging and presence protocol (XMPP), or (4-2) protocols for use in ICQ (registered trademark), AIM (registered trademark), or Skype (registered trademark). Further, (7) the extended instant messaging protocols may be Jingle.

### HARDWARE CONFIGURATION OF EMBODIMENT

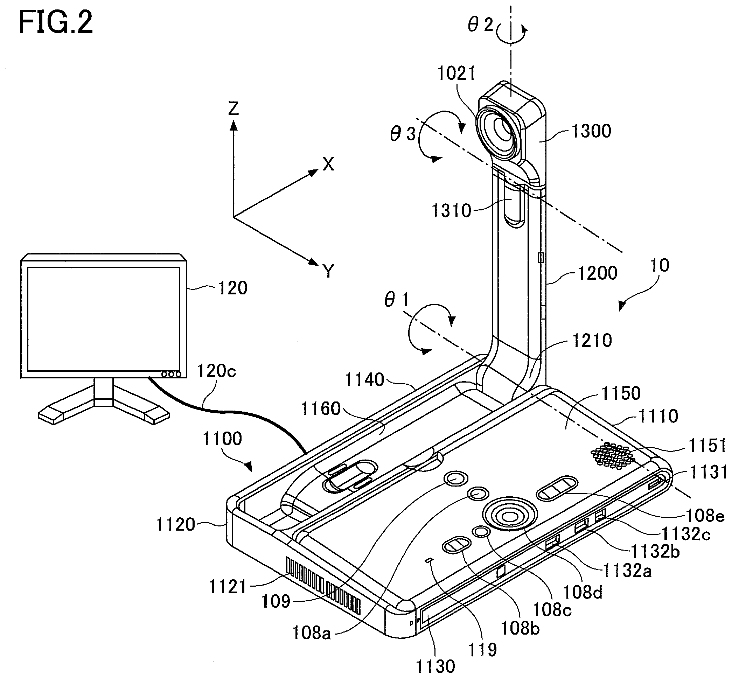

The following describes hardware configurations of the embodiment. FIG. 2 is an external view illustrating a terminal 10 according to an embodiment.

The terminal 10 includes, as illustrated in FIG. 2, a housing 1100, an arm 1200, and a camera housing 1300. The housing 1100 includes a front wall 1120 having a suction surface 1121 formed of multiple suction holes, and a rear wall 1110 having a not-illustrated emission surface formed of multiple emission holes. The housing 1100 having the above-described configuration may be able to drive a built-in cooling fan in the housing 1100 to suction external air from a front side of the terminal 10 via the suction surface 1121 and exhaust the air via the not-illustrated emission surface to the rear side of the terminal 10. A sound collecting hole 1131 is formed in the right side wall 1130 of the housing 1100 such that sound including noise and other sounds may be collected by a built-in microphone 114 via the sound collecting hole 1131.

The housing 1100 includes an operations panel 1150 on the right side wall 1130 side of the housing 1100. The operations panel 1150 includes later-described operations buttons (108a to 108e), a later-described power switch 109, a later-described alarm lamp 119, and a sound output surface 1151 formed of multiple sound output holes for outputting sound from a later-described built-in speaker 115. The housing 1100 includes a housing 1160 configured to house the arm 1200 and the camera housing 1300 as a recess part in a left side wall 1140 of the housing 1100. The housing 1100 further includes multiple connector ports (1132a to 1132c) for electrically coupling cables in the right side wall 1130 with respect to a later-described external apparatus coupling I/F 118. The housing 1100 includes a not-illustrated coupling port in the left side wall 1140 of the housing 1100 for electrically coupling a cable 120c of a display 120 to the later-described external apparatus coupling I/F 118.

Note that in the following description, an "operations button 108" indicates any one of the operations buttons (108a to 108e), and a "coupling port 1132" indicates any one of the coupling ports (1132a to 1132c) .

Next, the arm 1200 is attached to the housing 1100 via a torque hinge 1210 such that the arm 1200 is configured to turn in a vertical direction (upward and downward directions) within a range of 135 degrees of a tilt angle θ1 with respect to the housing 1100. FIG. 2 illustrates an example of the tilt angle θ1 being 90 degrees.

The camera hosing 1300 is provided with a later-described built-in camera 112 configured to image users, documents, rooms, and the like. The camera housing 1300 is also provided with a torque hinge 1310. The camera housing 1300 is attached to the arm 1200 via the torque hinge 1310. The camera housing 1300 is attached to the arm 1200 via the torque hinge 1310 such that the camera housing 1300 is configured to turn in vertical and a horizontal directions, within a range of ±180 degrees of a pan angle θ2 and within a range of ±45 degrees of a tilt angle θ3 with respect to the arm 1200 illustrated in FIG. 2 being set at an angle of 0 degree.

Note that the external view of the terminal 10 illustrated in FIG. 2 is only an example, and the external view is thus not limited to this example illustrated in FIG. 2. For example, the terminal 10 may be a general-purpose computer, a mobile terminal, a projector, an electronic whiteboard, a digital signage, and the like (see terminals (10ac and 10cc) of FIG. 1). When a computer used as the terminal 10 does not include a microphone or a camera, an externally provided microphone or an externally provided camera may be coupled to the computer. When the terminal 10 is a general-purpose computer or a mobile phone terminal, the terminal 10 may be coupled to the Internet 2i via wireless communications by a wireless LAN or a mobile phone network. Hence, the general-purpose computer or the mobile phone terminal may be used as the terminal 10 of the embodiments. Further, when the general-purpose computer is used as the terminal 10, the terminal 10 may have installed application programs (hereinafter called "applications") for causing the computer to execute later-described processes of the terminal 10.

Note that external views of the relay apparatus 30, the management system 50, the program providing system 90, and the maintenance system 100 may be similar to external views of general server computers. Hence, illustration of the external views of the relay apparatus 30, the management system 50, the program providing system 900, and the maintenance system 100 are omitted from the description.

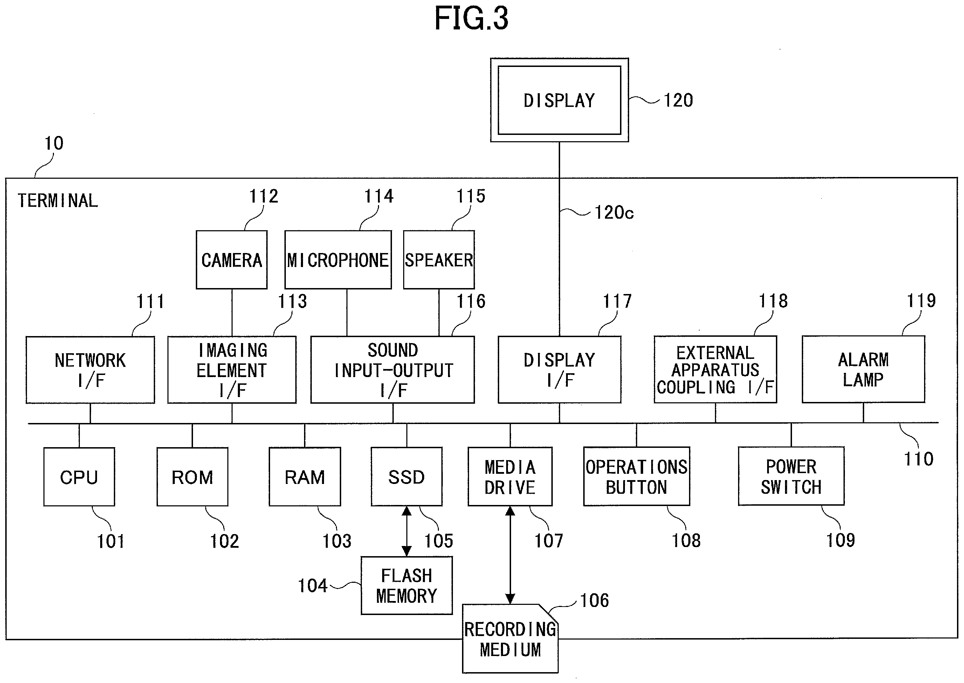

FIG. 3 is a hardware configuration diagram of the terminal 10 according to an embodiment. The terminal 10 includes a central processing unit (CPU) 101 configured to control overall operations of the terminal 10, a read only memory (ROM) 102 storing programs for driving the CPU 101 such as initial program loader (IPL), a random access memory (RAM) 103 serving as a work area of the CPU 101, a flash memory 104 storing various types of data such as communications terminal 10-specific programs, image data and sound data, a solid state drive (SDD) 105 configured to control reading or writing of various types of data with respect to the flash memory 104 based on the control of the CPU 101, a media drive 107 configured to control reading or writing (storing) of data with respect to a recording medium 106 such as a flash memory and an integrated circuit (IC) card, an operations button 108 configured to be operated for selecting a destination of the terminal 10, a power switch 109 configured to switch ON/OFF of the power supply of the terminal 10, and a network interface (I/F) 111 for transmitting data using the communications network 2.

The terminal 10 further includes the built-in camera 112 configured to image a subject to acquire image data in accordance with the control of the CPU 101, an imaging element I/F 113 configured to control the drive of the camera 112, the built-in microphone 114 configured to collect sound, a built-in speaker 115 configured to output sound, a sound input I/F 116 configured to process input sound signals and output sound signals between the microphone 114 and the speaker 115 in accordance with the control of the CPU 101, a display I/F 117 configured to transmit image data to an externally attached display 120 in accordance with the control of the CPU 101, an external apparatus coupling I/F 118 for coupling various types of external apparatuses, an alarm lamp 119 configured to report abnormalities of various functions of the terminal 10, and a bus line 110 such as an address bus or a data bus for electrically coupling the above-described components illustrated in FIG. 3.

The display 120 is a display part formed of liquid crystal or organic electroluminescence (OLED), and configured to display an image of a subject or operational icons. The display 120 is coupled to the display I/F 117 via a cable 120c. The cable 120c may be an analog RGB (VGA) signal-specific cable, a component video-specific cable, a high-definition multimedia interface (HDMI) (registered trademark) or a digital video interactive (DVI) signal-specific cable. Note that HDMI is a registered trademark.

The camera 112 includes lenses or a solid-state image sensor configured to convert light capturing a subject into electric charges to transform an image (video) of the subject into electronic data. Examples of the solid-state image sensor include a complementary metal oxide semiconductor (CMOS) or a charge coupled device (CCD).

External apparatuses such as an externally provided camera, an externally provided microphone, and an externally provided speaker may electrically be coupled to the external apparatus coupling I/F 118 via a universal serial bus (USB) cable or the like inserted in a connector port 1132 of the housing 1100 of the terminal 10. When the externally provided camera is coupled to the external apparatus coupling I/F 181, the externally provided camera is driven in priority to the built-in camera 112 in accordance with the control of the CPU 101. Similarly, when the externally provided microphone or the externally provided speaker is coupled to the external apparatus coupling I/F 181, the externally provided microphone or the externally provided speaker coupled to the external apparatus coupling I/F 181 is driven in preference to a corresponding one of the built-in microphone 114 and the built-in speaker 115 in accordance with the control of the CPU 101.

Note that the recording medium 106 is configured to be removable from the terminal 10. When the recording medium 106 is a nonvolatile memory configured to read or write data in accordance with the control of the CPU 101, such a nonvolatile memory used as the medium 106 is not limited to the flash memory 104. The nonvolatile memory used as the medium 106 may be an electrically erasable and programmable ROM (EEPROM), or the like.

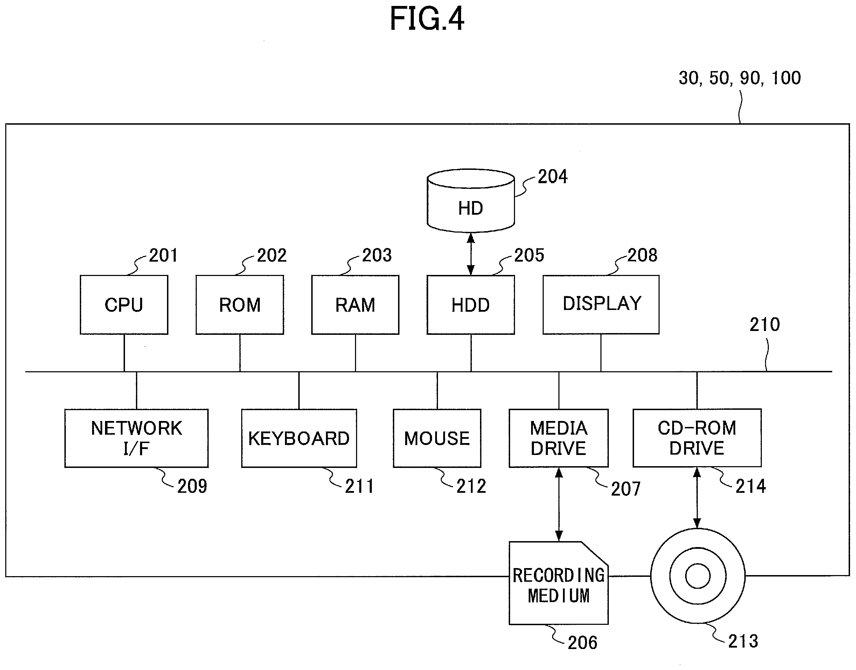

FIG. 4 is a hardware configuration diagram of the management system 50 according to an embodiment. The management system 50 includes a CPU 201 configured to control overall operations of the management system 50, a ROM 202 configured to store a program for use in driving the CPU 201 such as an IPL, a RAM 203 configured to serve as a work area of the CPU 201, an HD 204 configured to store various types of data specific to the management system 50, a hard disk drive (HDD) 205 configured to control reading or writing of the data with respect to the HD 204 in accordance of the control of the CPU 201, a media I/F 207 configured to control reading or writing (storing) of data with respect to a recording medium 206 such as flash memory or the like, a display 208 configured to display various types of information such as a cursor, menus, windows, characters, or images, a network I/F 209 configured to perform data communications using the communications network 2, a keyboard 211 provided with multiple keys for inputting characters, numeric values, various types of instructions and the like, a mouse 212 configured to select or execute various types of instructions, select a process target and move a cursor, a CD-ROM drive 214 configured to control reading or writing of data with respect to a compact disc read only memory (CD-ROM) 213 as an example of a removable recording medium, and a bus line 210 such as an address bus or a data bus for electrically coupling the above-described components as illustrated in FIG. 4.

The relay apparatus 30, the program providing system 90 and the maintenance system 100 have a hardware configuration similar to the hardware configuration of the management system 50, and hence, a duplicated illustration of the relay apparatus 30, the program providing system 90 and the maintenance system 100 is omitted from the description.

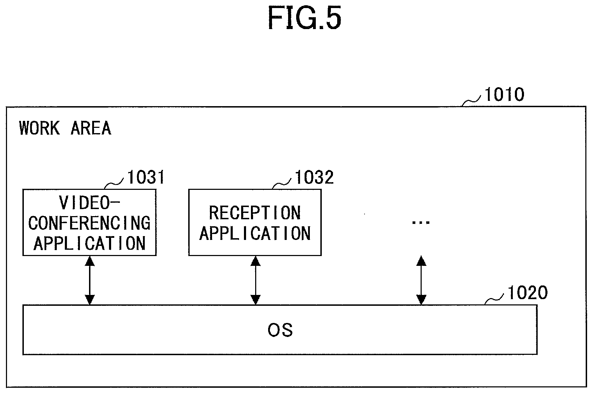

FIG. 5 is a software configuration diagram of the terminal 10. As illustrated in FIG. 5, an OS 1020, a videoconferencing application 1031, and a reception application 1032 operate on a work area 1010 of the RAM 103. The OS 1020, the videoconferencing application 1031 and the reception application 1032 are installed on the terminal 10 before factory shipment.

Of these programs, the OS 1020 is basic software that provides basic functions to manage the overall terminal 10. The videoconferencing application 1031 is application software to couple the terminal 10 to another terminal 10 to conduct videoconferencing. The reception application 1032 is application software to couple the terminal 10 to a call center terminal 10 to allow a user of the terminal 10 to talk to an operator of the call center terminal 10.

The above-described videoconferencing application 1031 and the reception application 1032 are only examples and other applications may also be installed on the terminal 10. To install other applications on the terminal 10, there applications may be stored in the program providing system 90 in advance, and downloaded from the program providing system 90 in response to a request from the terminal 10. To install multiple videoconferencing applications on the terminal 10, the videoconferencing applications having different protocols may be installed in the terminal 10 as noted above (1) to (7).

### FUNCTIONAL CONFIGURATIONS OF EMBODIMENT

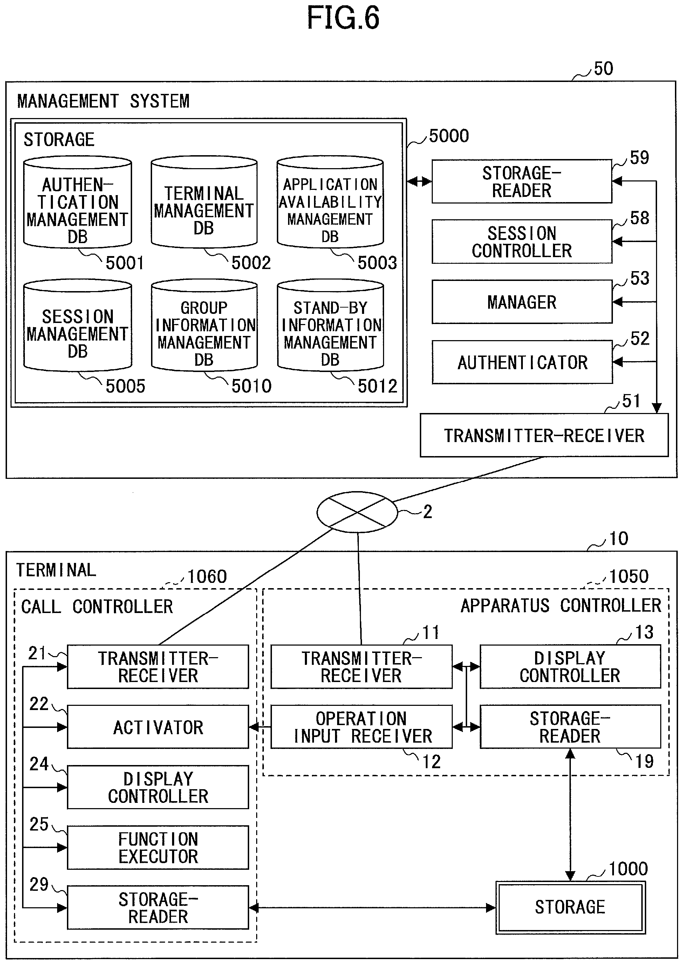

The following describes functional configurations of the communications system 1 according to the embodiment. FIG. 6 is a functional block diagram illustrating a configuration of the terminal 10 and a configuration of the management system 50 that partially form the communications system 1 of the embodiment. Note that in FIG. 6, the terminal 10, and the management system 50 are coupled via the communications network 2 to perform data communications with each other. FIG. 6 depicts functions implemented by the videoconferencing application 1031 or the reception application 1032.

### FUNCTIONAL CONFIGURATION OF TERMINAL

The terminal 10 includes an apparatus controller 1050 and a call controller 1060. Of these, the apparatus controller 1050 may be implemented by the execution of the OS 1020. The call controller 1060 may be implemented by the activation of the videoconferencing application 1031 or the reception application 1032.

The apparatus controller 1050 includes a transmitter-receiver 11, an operation input receiver 12, a display controller 13, and a storage-reader 19. The above-described components are functions implemented by causing any one of the components illustrated in FIG. 3 to operate by instructions from the CPU 101 in accordance with an activation application (program) loaded from the flash memory 104 in the RAM 103.

The call controller 1060 includes a transmitter-receiver 21, an activator 22, a display controller 24, a function executor 25, and a storage-reader 29. The above-described components are functions implemented by causing any one of the components illustrated in FIG. 3 to operate by instructions from the CPU 101 in accordance with the videoconferencing application 1031 or the reception application 1032 (respective programs) loaded from the flash memory 104 in the RAM 103.

The terminal 10 includes a storage 1000 formed of the ROM 102, the RAM 103, and the flash memory 104 illustrated in FIG. 3.

### FUNCTIONAL CONFIGURATION OF APPARATUS CONTROLLER

The following describes functional configurations of the apparatus controller 1050 of the terminal 10. Note that the illustration given below also includes a relationship between the main components among the components illustrated in FIG. 3 and the apparatus controller 1050 for implementing respective functional configurations of the apparatus controller 1050 of the terminal 10.

The transmitter-receiver 10 is implemented by the CPU 101 to execute instructions, and configured to perform, using the network I/F 111, transmission and reception of various types of data (or information) with communications counterpart terminals, apparatuses, or systems via the communications network 2.

The operation input receiver 12 is implemented by the CPU 101 to execute instructions, and configured to receive various types of inputs or various types of selections made by the user, using operations buttons (108a, 108b, 108c, 108d and 108e) and the power switch 109. For example, when the user switches the power switch 109 ON, the operations input receiver 12 receives a power ON instruction to turn the power of the terminal 10 ON.

The display controller 13 is implemented by the CPU 101 to execute instructions, and configured to control, using the display I/F 117, transmission of image data received from the communications counterparts for having conversations to the display 120.

The storage-reader 19 is implemented by the CPU 101 to execute instructions and configured to store various types of data in the storage 1000 or extract various types of data from the storage 1000, using and the SSD 105.

### FUNCTIONAL CONFIGURATION OF CALL CONTROLLER

The following describes functional configurations of a call controller 1060 of the terminal 10. Note that the illustration given below also includes a relationship between the main components among those components illustrated in FIG. 3 and the call controller 1060 of the terminal 10 for implementing the respective functional configurations of the call controller 1060 of the terminal 10.

The transmitter-receiver 21 is implemented by the CPU 101 to execute instructions, and configured to perform, using the network I/F 111, transmission and reception of various types of data (or information) with communications counterpart terminals, apparatuses, or systems via the communications network 2.

The activator 22 is implemented by the CPU 101 to execute instructions, and configured to activate the call controller 1060 (a selected one of the videoconferencing application 1031 and the reception application 1032) in response to an activation request from the operation input receiver 12 when the operation input receiver 12 of the apparatus controller 1050 has received one of the applications (i.e., the videoconferencing application 1031 and the reception application 1032) selected by the user.

The display controller 24 is implemented by the CPU 101 to execute instructions, and is configured to control transmission of screen data to the display 120, using the display I/F 117.

The function executor 25 is implemented by the CPU 101 to execute instructions, and configured to perform control for implementing a phone call conversation through images, sound and the like, using the camera 112, the microphone 114, the speaker 115 and the like.

The storage-reader 29 is implemented by the CPU 101 to execute instructions and configured to store various types of data in the storage 1000 or extract various types of data from the storage 1000, using and the SSD 105.

### FUNCTIONAL CONFIGURATION OF MANAGEMENT SYSTEM

The management server 50 includes a transmitter-receiver 51, an authenticator 52, a manager 53, a session controller 58, and a storage-reader 59. The above-described components are functions implemented by causing any one of the components illustrated in FIG. 4 to operate by instructions from the CPU 201 in accordance with the management system programs loaded from the HD 204 in the RAM 203. The management system 50 includes a storage 5000 composed of the HD 204. The storage 5000 stores application icon data for each of the application IDs. The storage 5000 includes databases DBs 5001, 5002, 5003, 5005, 5010, and 5012 composed of respective tables illustrated below.

### AUTHENTICATION MANAGEMENT TABLE

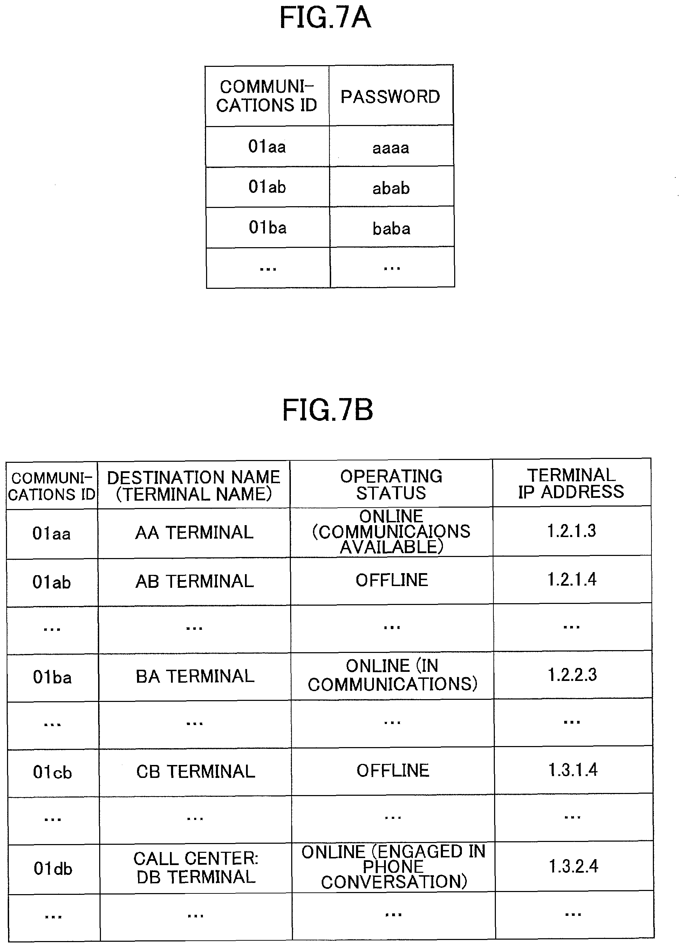

FIG. 7A is a schematic diagram illustrating an authentication management table. The storage 5000 includes an authentication management DB 5001 composed of an authentication management table illustrated in FIG. 7A. The authentication management table is configured to manage communications IDs of all the terminals 10 managed by the management system 50 in association with respective authentication passwords. Note that the communications IDs are information for identifying a transmission destination (a communication destination) or a transmission source (a communications source) of the content data. The communications ID may include information to identify the terminal 10, information to identify a user of the terminal 10, and information to identify a group composed of two or more terminals 10. The following description is based on the assumption in which the communications ID is identifier information of the terminal 10 or group identifier information of the group of the terminals 10.

### TERMINAL MANAGEMENT TABLE

FIG. 7B is a schematic diagram illustrating a terminal management table. The storage 5000 includes a terminal management DB 5002 composed, for example, of the terminal management table illustrated in FIG. 7B. The terminal management table is configured to manage a destination name (a terminal name), an operating status and an IP address for each of the terminals 10 that serve as destinations in association with a communications ID of a corresponding one of the terminals 10. Note that the operating status "OFFLINE" indicates that the terminal 10 is not coupled to the management system 50. The operating status "ONLINE (communications available)" indicates that the terminal 10 is coupled to the management system 50 but is not in communications with any of the other terminals 10. The operating status "ONLINE (in communications)" indicates that the terminal 10 is coupled to the management system 50 and is in communications with other terminals 10, but the terminal 10 is not receiving content data from the communications counterpart terminal 10. The operating status "ONLINE (engaged in conversation)" indicates that the terminal 10 is coupled to the management system 50, is in communications with other terminals 10 and is receiving content data from the communications counterpart terminal 10.

### APPLICATION AVAILABILITY MANAGEMENT TABLE

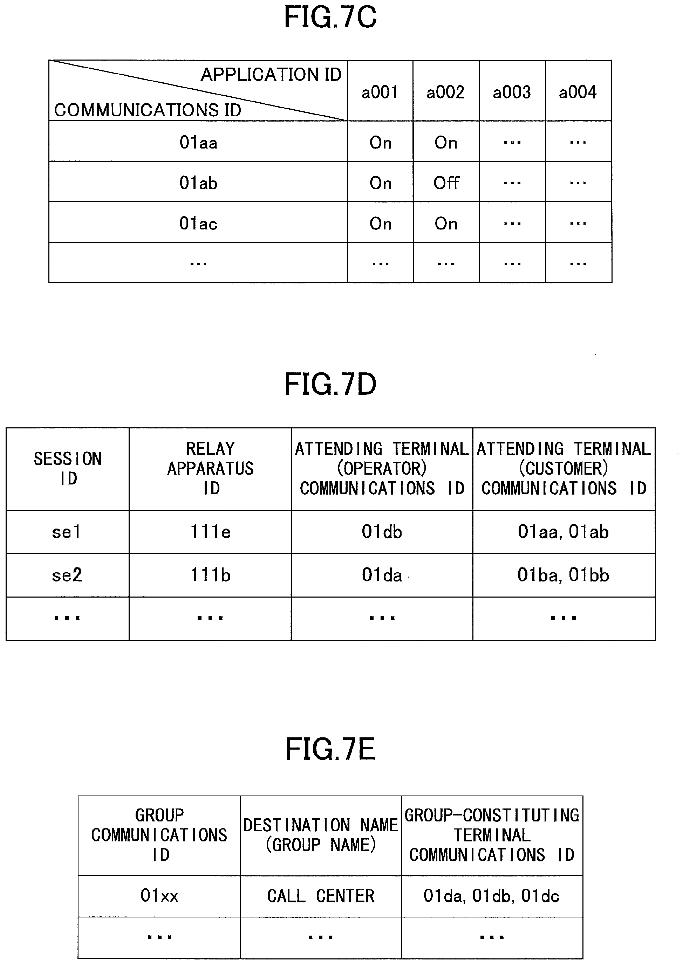

FIG. 7C is a schematic diagram illustrating an application availability management table. The storage 5000 includes an application availability management DB 5003 composed, for example, of the application availability table illustrated in FIG. 7C. The terminal management table is configured to manage availability information indicating whether the applications are available (On) or unavailable (Off) in the terminals 10 in association with the communications IDs of the terminals 10 and the application IDs for identifying applications installed in the terminals 10, for each of application IDs and each of the communications IDs.

### SESSION MANAGEMENT TABLE

FIG. 7D is a schematic diagram illustrating a session management table. The storage 5000 includes a session management DB 5005 composed, for example, of the session management table illustrated in FIG. 7D. The session management table is configured to manage relay apparatus IDs of the relay apparatuses 30 that relay content data between the terminals 10 in sessions, the communications IDs of the call center's (operators') terminals of the terminals (attending terminals) 10 that attend the sessions, and the communications IDs of the customers' terminals of the attending terminals 10 that serve as communications counterparts of the operators' terminals in association with each of the session IDs for identifying the respective sessions for transmitting content data between the terminals 10.

### GROUP INFORMATION MANAGEMENT TABLE

FIG. 7E is a schematic diagram illustrating a group information management table. The storage 5000 includes a group information management DB 5010 composed, for example, of the group information management table illustrated in FIG. 7E. The group information management table is configured to manage group communications IDs for identifying groups in association with destination names (group names) of the group as communications destinations and the communications IDs of the terminals 10 constituting the respective groups.

### STANDBY INFORMATION MANAGEMENT TABLE

FIG. 7E is a schematic diagram illustrating a standby information management table. The storage 5000 includes a standby information management DB 5012 composed, for example, of the standby information management table illustrated in FIG. 7E. The standby information management table is configured to manage the communications IDs of the operators' attending terminals in association with the communications IDs of the customers' standby terminals that standby communications with the operators' attending terminals and received time at which the management system 50 has received communications start requests for starting communications with the operators' attending terminals.

### FUNCTIONAL CONFIGURATION OF MANAGEMENT SYSTEM

The following describes a detailed functional configuration of the management system 50. Note that the following also illustrates a relationship between the main components among those components illustrated in FIG. 4 and the management system 50 for implementing respective functions of the management system 50.

The transmitter-receiver 51 is implemented by the CPU 201 to execute instructions, and configured to perform, using the network I/F 209, transmission and reception of various types of data (or information) with communications counterpart terminals, apparatuses, or systems via the communications network 2.

The authenticator 52 is implemented by the CPU 201 to execute instructions, and configured to search the authentication management table by a communications ID and password combination received by the transmitter-receiver 51, and determine whether the authentication management table includes the communications ID and password combination identical to the received communications ID and password combination to authenticate the terminal 10.

The manager 53 is implemented by the CPU 201 to execute instructions, and configured to perform an update process for updating the operating statuses in the terminal management table (see FIG. 7B) with the latest operating statuses.

The session controller 58 is implemented by the CPU 201 to execute instructions, and configured to control a content data session for transmitting content data between the terminals 10. The control performed by the session controller 58 includes control for establishing a session, control for allowing the terminal 10 to attend the established session, control for disconnecting the session, and control for transmitting content data in the established session.

The storage-reader 59 is implemented by the CPU 201 to execute instructions and configured to store, using and the HDD 205, various types of data in the storage 5000 or extract various types of data from the storage 5000.

### PROCESSES AND OPERATIONS OF COMMUNICATIONS SYSTEM 1

The description of the configuration and functions (or means) of the communication system 1 are given above, and processes in the communication system 1 are subsequently described.

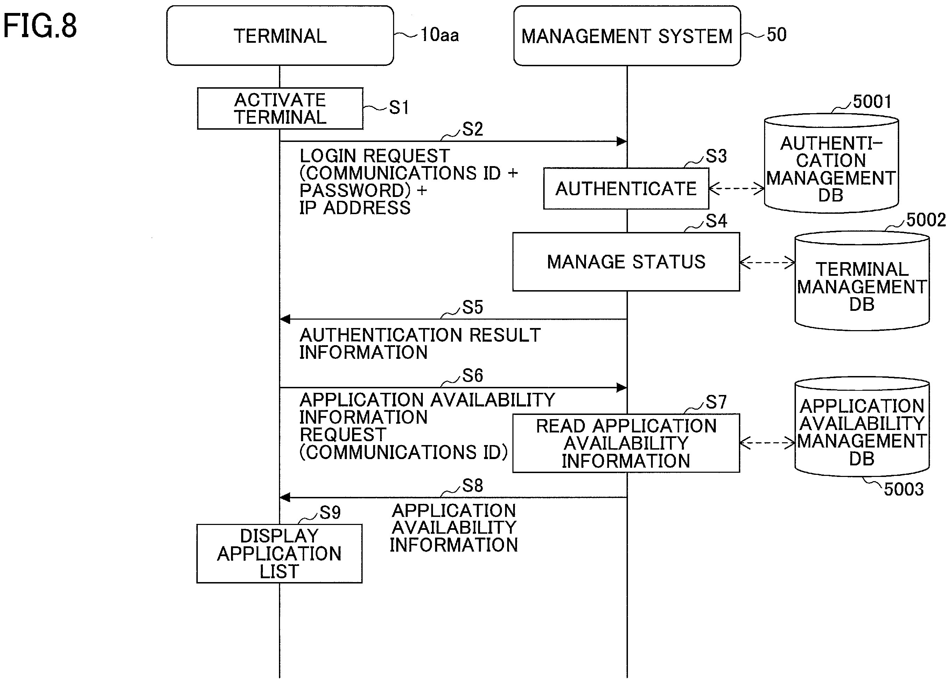

Initially, a description is given, with reference to FIG. 8, of a process from the activation of the terminal 10aa to the display of an application list on the terminal 10aa. FIG. 8 is a sequence diagram illustrating a process from the activation of the terminal 10 to the display of the application list.

When a user switches the power switch 109 ON, the operations input receiver 12 activates the terminal 10aa upon reception of the power ON (step S1). The transmitter-receiver 11 transmits a login request to the management system 50 via communications network 2 upon the reception of the power ON as trigger (step S2). The transmitter-receiver 51 of the management system 50 receives the login request as a result. This login request includes a communications ID and password combination for identifying the own terminal 10aa as a source of the login request. The terminal ID and password are data that are read from storage 1000 via the storage-reader 19 and transmitted to the transmitter-receiver 11. Note that the terminal ID and password combination may also be input by the user of the request source terminal. Note that the management system 50 as a receiver may be able to acquire an IP address of the terminal 10aa as a transmitter from the login request transmitted from the terminal 100aa to the management system 50.

The authenticator 52 of the management system 50 subsequently authenticates the terminal 10aa by searching the authentication management table (see FIG. 7A) of the storage 5000 by the communications ID and password combination included in the login request as a search key, and determining whether the communications ID and password combination managed in the authentication management table is identical to the communications ID and password combination included in the login request (step S3). When the authenticator 52 authenticates the login request as a login request transmitted from the terminal 10aa having a valid access right, the manager 53 stores the communications ID "01aa" of the terminal 10aa in association with the operating status "ONLINE (communications available)" and the IP address of the terminal 10aa in the terminal management table (see FIG. 7B) (step S4).

The transmitter-receiver 51 of the management system 50 subsequently transmits authentication result information indicating an authentication result obtained by the authenticator 52 to the terminal 10aa as the source of the login request via the communications network 2 (step S25). The transmitter-receiver 11 of the terminal 10aa receives the authentication result information as a result.

When the authenticator 52 authenticates the terminal 10aa as a terminal having a valid access right, the transmitter-receiver 51 of the terminal 10aa transmits an application availability information request indicating available applications installed in the terminal 10aa to the management system 50 via the communications network 2 (step S6). This application availability information request includes the communications ID of the terminal 10aa as a source of the application availability information request. The transmitter-receiver 51 of the management system 50 receives the application availability information request as a result.

The storage-reader 59 of the management system 50 searches the application availability table (see FIG. 7C) by, as a search key, the communications ID of the terminal 10aa as the source of the application availability information request and reads a corresponding one of the application availability information pieces (step S7). The application availability information in this case indicates the application ID "a001" being "On", and the application ID "a002" being "On", and the like.

The transmitter-receiver 11 subsequently transmits the application availability information read in step S7 to the terminal 10aa as the source of the application availability information request via the communications network 2 (step S8). The transmitter-receiver 11 of the terminal 10aa receives the application availability information as a result.

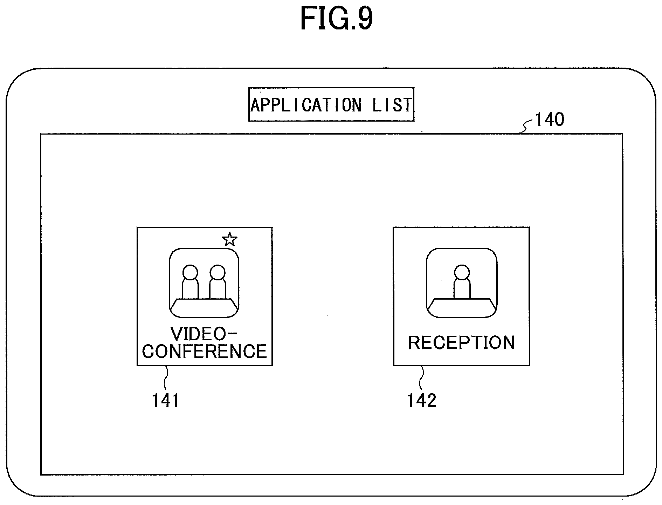

The display controller 13 subsequently displays a screen 140 that displays a list of applications illustrated in FIG. 9 on the display 120aa (step S9). Note that FIG. 9 is a diagram illustrating an example of the screen that displays the application list. The screen 140 displays application icons (141, 142, ...) each in association with a corresponding one of the application IDs (a001, a002, ...), for all the application IDs (a001, a002, ...) having the application availability information being indicated as being available (On).

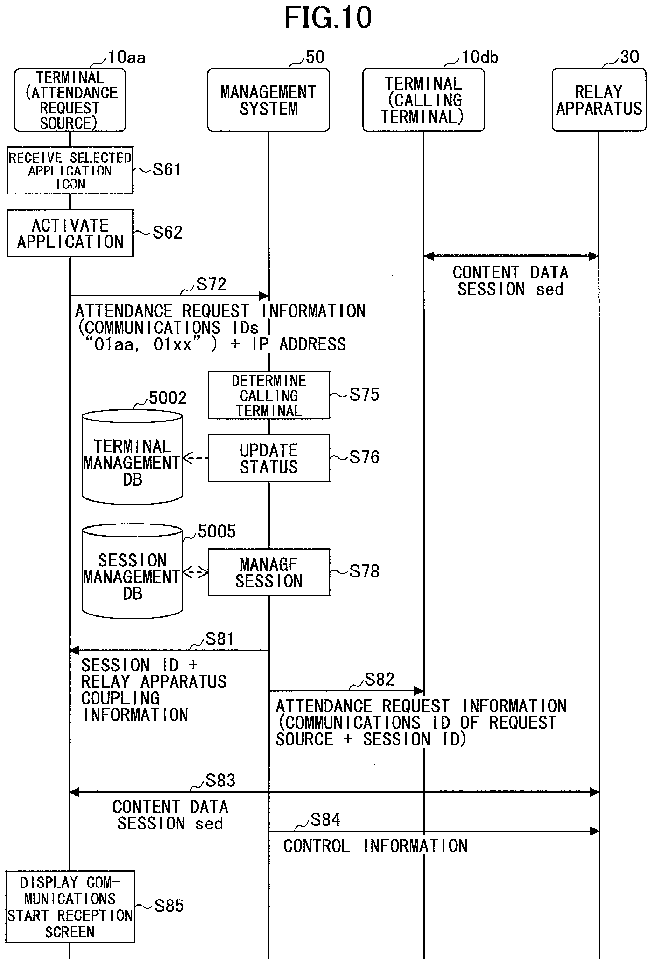

Subsequently, a description is given of an example in which the application icon 142 of the application icons is selected by the user of the terminal 10aa with reference to FIG. 10. FIG. 10 is a sequence diagram illustrating a process of requesting attendance at a content data session.

When the user operates operations buttons (108a to 108e) to select the application icon 142 that indicates a reception application 1032 as a desired one of the application icons illustrated in FIG. 9, the operation input receiver 12 of the terminal 10aa receives the selection of the application icon 142 operated by the user (step S61).

Subsequently, the operation input receiver 12 of the apparatus controller 1050 instructs an activator 22 implemented by the selected reception application 1032 to activate the call controller 1060 corresponding to the reception application 1032 (step S62). Note that the process before step S62 is performed by the apparatus controller 1050; however, processes subsequent to step S62 will be performed by the call controller 1060 that is implemented by the activation of the reception application 1032.

The transmitter-receiver 21 of the terminal 10aa transmits attendance request information including the communications ID "01aa" of the attendance request source terminal 10aa and the communications ID "01xx" of the destination candidate together with the IP address of the attendance request source terminal 10aa to the management system 50 (step S72). Note that the communications ID "01xx" of the destination candidate indicates a communications ID of the call center as the destination, which is automatically selected by the process of the transmitter-receiver 21 based on the reception application 1032. Further, the attendance request information is information indicating an attendance request for the own terminal 10 to attend the content data session in which the terminals 10 constituting the call center participate.

The session controller 58 of the management system 50 subsequently determines a terminal 10 to call (a calling terminal) from the terminals 10 constituting a group identified by the group communications ID "01xx" (step S75). A method for determining the calling terminal may include, but not limited to, causing the session controller 58 to refer to the session management table (see FIG. 7D) to select one of the operators' attending terminals that has the least number of the customers' attending terminals. The following illustrates an example where the terminal 10db is determined as the calling terminal. Further, the illustration will be continued based on the assumption where, at the time where the calling terminal is determined, the terminal 10db as the calling terminal attends the content data session sed for transmitting the content data via the relay apparatus 30 to another terminal 10.

The manager 53 changes the operating statuses associated with the respective communications IDs of the start request source terminal 10aa and the calling terminal as the destination to the "ONLINE (in communications)" in the terminal management table (step S76) .

The session controller 58 subsequently adds the communications ID "01aa" of the attendance request source terminal 10aa in a field of the attending terminal (customer) corresponding to the communications ID "01db" of the calling terminal (terminal 10db), which is recorded as the communication ID of the attending terminal (operator) in a record of the session management table (see FIG. 7D) (step S78). In a part of the process of step S78, the session controller 58 searches the session management table by the communications ID "01db" of the calling terminal (terminal 10db) as a search key, and reads the associated session ID and relay apparatus ID.

The transmitter-receiver 51 subsequently transmits to the attendance request source terminal 10aa relay apparatus coupling information for coupling to the relay apparatus 30 identified by the relay apparatus ID read in step S78 (step S81). The relay apparatus coupling information may include an IP address of the relay apparatus 30, authentication information, a port number, and a session ID retrieved in step S78.

The transmitter-receiver 51 subsequently transmits attendance request information including the communications ID "01aa" of the attendance request source terminal 10aa and the session ID retrieved in step S78 to the calling terminal (the terminal 10db) (step S82).

The attendance request source terminal 10aa is coupled to the relay apparatus 30 using the relay apparatus coupling information transmitted from the management system 50. The attendance request source terminal 10aa as a result attends the content data session sed in which the calling terminal (the terminal 10db) participates (step S83). The terminals (10aa and 10db) that attend the content data session sed may be able to transmit respective content data generated by themselves (the own terminals) to the relay apparatus 30.

The session controller 58 of the management system 50 subsequently transmits control information including instructions for controlling the transmission of the content data between the attending terminals to the relay apparatus 30 via the transmitter-receiver 51 (step S84). The control information includes an instruction to start transmitting image data from the customer's terminal 10aa to the operator's terminal 10db, an instruction to disallow transmission of sound data received from the customer's terminal 10aa to the operator's terminal 10db, and an instruction to disallow transmission of image data and sound data received from the operator's terminal 10db to the customer's terminal 10aa.

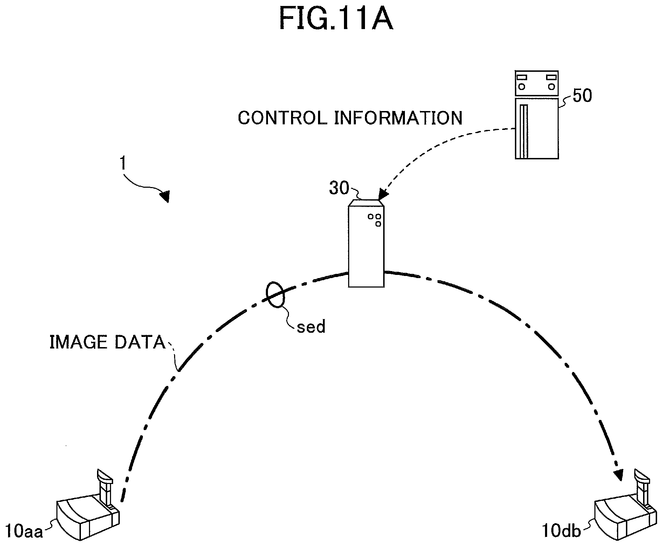

FIG. 11A is a schematic diagram illustrating transmission and reception of various types of information in the communications system 1. As illustrated in FIG. 11A, the relay apparatus 30 receives the image data transmitted from the terminal 10aa and transmits the received image data to the operator's terminal 10db, in compliance with the instructions in the control information. On the other hand, the relay apparatus 30 does not transmit the image data and the sound data transmitted by the operator's terminal 10db to the customer's terminal 10aa.

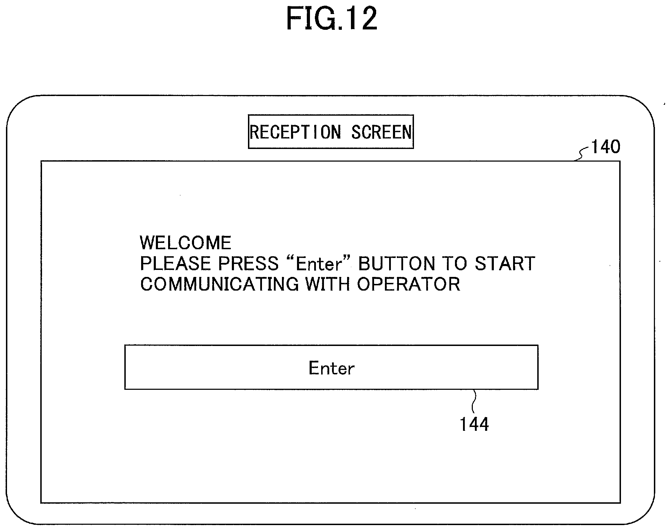

In this status, the content data are not transmitted from the operator's terminal 10db to the customer's terminal 10aa, and the operator is thus not able to start conversation with the customer. To handle this status, the display controller 24 of the customer's terminal 10aa output a reception screen of a conversation start request for receiving a request for having conversation with the operator (a conversation start request) on the display 120aa (step S85). FIG. 12 is a diagram illustrating an example of such a reception screen 140. The reception screen 140 displays a button 144 for receiving the conversation start request with an operator of the call center.

The processes described above indicate processes up to receiving the conversation start request.

Note that the management system 50 that has received the attendance request from another terminal serving as a customer's terminal 10 executes the same processes as those in steps S75 to S84. As a result, three or more terminals 10 may be able to attend a common content data session sed.

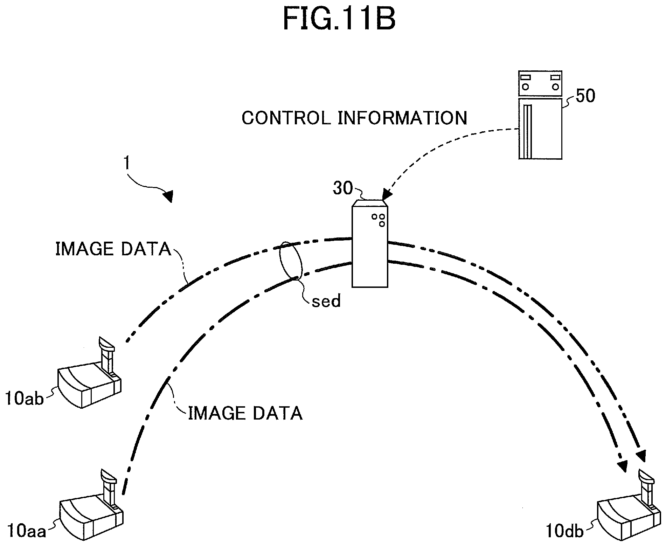

FIG. 11B is a schematic diagram illustrating states of transmitting or receiving various types of information in the communications system 1 when the terminals (10aa, 10ab and 10db) attend the common content data session sed. In this case, the operator's terminal 10db receives the image data transmitted by the customer's terminals (10aa and 10ab) via the relay apparatus 30. On the other hand, the customers' terminals (10aa and 10ab) are unable to receive the image data transmitted by the terminal 10db under the control of step S84.

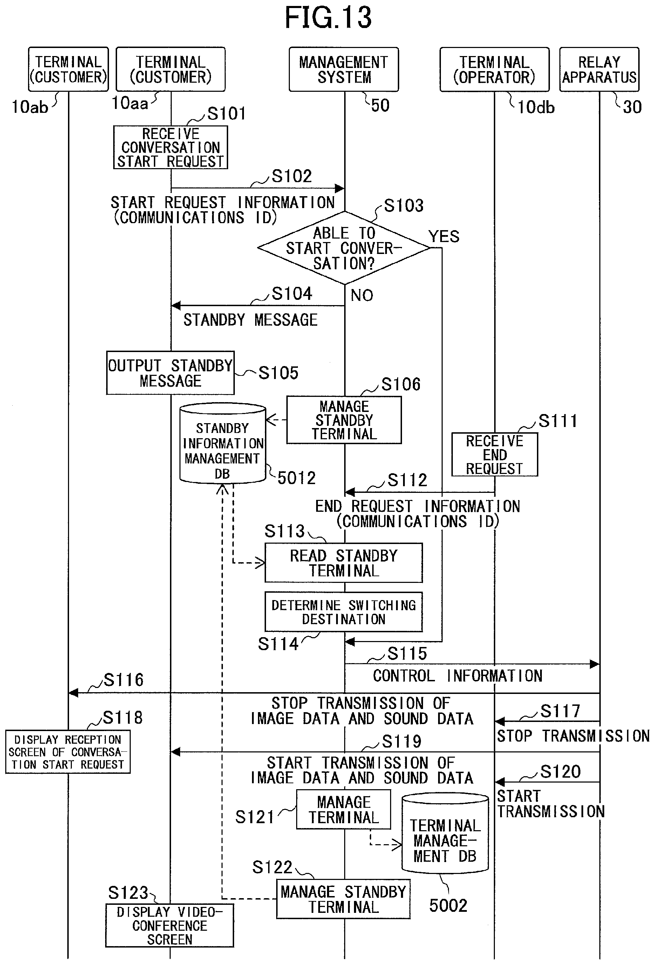

Subsequently, a description is given, with reference to FIG. 13, of a process in which the customer's terminal 10aa requests the operator's terminal 10db to transmit the content data to the customer's terminal 10aa itself (own terminal). FIG. 13 is a sequence diagram illustrating a process of requesting transmission of content data.

When a customer as a user of the terminal 10aa presses the button 144 on the reception screen 140 of FIG. 12, the function executor 25 receives a phone conversation start request (step S101). The transmitter-receiver 21 of the terminal 10aa subsequently transmits to the management system 50 start request information including the communications ID "01aa" of the terminal 10aa serving as a phone conversation start request source and the communications ID of the operator's terminal 10db as a communications counterpart (step S102).

When the transmitter-receiver 51 of the management system 50 receives the start request information, the session controller 58 determines whether the terminal 10aa is able to start the conversation with the terminal 10db based on the request (step S103). In this case, the session controller 58 refers to the operation status associated with the communications ID "01db"of the operator's terminal 10db in the terminal management table (see FIG. 11B), and determines that the terminal 10aa is able to start conversation with the terminal 10db when the associated operation status is "Online (in communications)". On the other hand, the session controller 58 refers to the operation status associated with the communications ID "01db" of the operator's terminal 10db in the terminal management table (see FIG. 11B), and determines that the terminal 10aa is unable to start communications with the terminal 10db when the associated operation status is "Online (engaged in a phone conversation)".

When the session controller 58 determines that the terminal 10aa is able to start a phone conversation with the terminal 10db ("YES" in step S103), the later-described steps S104 to S114 will not be executed, and step S115 is processed.

The following illustrates a case where a phone conversation is currently held between the users of the terminals 10 (10ab and 10db), and the session controller 58 determines that the terminal 10aa is unable to start the conversation with the terminal 10db ("NO" in step S103).

FIG. 11A is a schematic diagram illustrating transmission and reception of various types of information in the communications system 1. The phone conversation between the users of the terminals (10ab and 10db) may be implemented by the relay apparatus 30 to transmit image data and sound data transmitted from one of terminals (10ab and 10db) to the other one of terminals (10db and 10ab), based on the control of the session controller 58 of the management system 50. Note that in this example, the relay apparatus 30 transmits the image data transmitted from the terminal 10aa to the terminal 10db based on the control in step S84. That is, an operator who is a user of the terminal 10db is able to check the image based on the image data transmitted from the terminal 10aa while being engaged in the phone conversation with a customer who is a user of the terminal 10ab.

When "NO" is determined in step S104, the transmitter-receiver 51 transmits a message requesting standby for the start of the conversation to the terminal 10aa as a start request source (step S104). When the transmitter-receiver 21 of the terminal 10aa receives the message, the display controller 24 outputs the received message to the display 120aa (step S105).

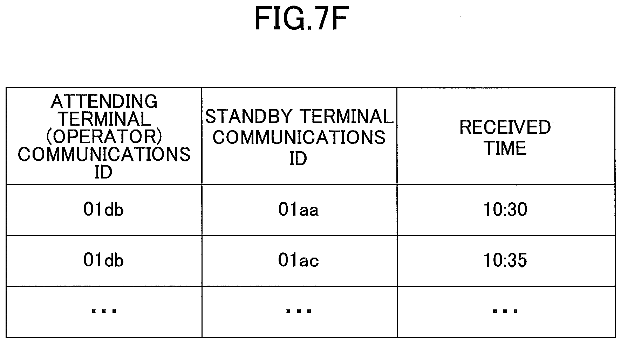

The storage-reader 59 of the management system 50 stores in the standby information management table (see FIG. 7F) the communications ID "01aa" of the terminal 10aa that is standby for the start of the conversation with the operator's terminal 10db and a received time at which the request for the start of the conversation in association with the communications ID "01db" of the operator's terminal 10db (step S106).

On the other hand, when the conversation between the users of the terminals 10 (10ab and 10db) has completed, the operation input receiver 12 of the terminal 10db receives an input of a request for the end of the conversation (step Sill). The transmitter-receiver 21 of the terminal 10db subsequently transmits, to the management system 50, end request information indicating the request for the end of the conversation (step S112). The end request information includes the communications ID of the own terminal 10db and the communications ID of the current conversation counterpart terminal 10ab.

When the transmitter-receiver 51 of the management system 50 receives the end request information, the storage-reader 59 searches the field of the attending terminal (the operator) of the standby information management table by the communications ID of the terminal 10db included in the end request information as a key to read the communications ID of the corresponding standby terminal and the received time (step S113). The session controller 58 subsequently determines a next conversation counterpart terminal 10 following the terminal 10db as a switching destination for conversation based on the communications ID of the standby terminal and the received time retrieved in step S113 (step S114). Note that when the transmitter-receiver 51 reads the communications IDs of two or more standby terminals in step S113, the session controller 58 subsequently determines the terminal for which the earliest received time is recorded as a switching destination. The following illustrates a case where the terminal 10aa is determined as the switching destination.

The session controller 58 of the management system 50 transmits control information including instructions for controlling the transmission of the content data between the attending terminals to the relay apparatus 30 via the transmitter-receiver 51 (step S115). The control information includes at least four instructions on the basis of the above-described end request information and switching destination. The first instruction is to disallow transmission of the image data and sound data from the operator's terminal 10db to the terminal 10ab that is a current conversation counterpart of the terminal 10db. The second instruction is to disallow transmission of the sound data that have been received from the terminal 10ab to the terminal 10db. The third instruction is to start transmitting to the terminal 10aa serving as the switching destination the image data and the sound data received from the operator's terminal 10db after having executed respective processes based on the first instruction and the second instruction. The fourth instruction is to start transmitting the sound data received from the terminal 10aa to the terminal 10db after having executed respective processes based on the first instruction and the second instruction.

The relay apparatus 30 stops transmitting the image data and the sound data received from the operator's terminal 10db to the terminal 10ab in compliance with the first instruction included in the control information (step S116). The relay apparatus 30 subsequently stops transmitting the sound data received from the terminal 10ab to the terminal 10db in compliance with the second instruction included in the control information (step S117).

In the customer's terminal 10ab to which the transmission of the image data and the sound data from the operator's terminal 10db has been stopped, the display controller 24 outputs a start request reception screen of the conversation for receiving a request to start a new conversation with the operator to the display 120ab (step S118). The start request reception screen of the conversation is similar to that illustrated in FIG. 12.

The relay apparatus 30 subsequently starts transmitting the image data and the sound data received from the operator's terminal 10db to the terminal 10aa serving as the switching destination in compliance with the third instruction included in the control information (step S119). The relay apparatus 30 subsequently starts transmitting the sound data received from the terminal 10aa to the terminal 10db in compliance with the fourth instruction (step S120).

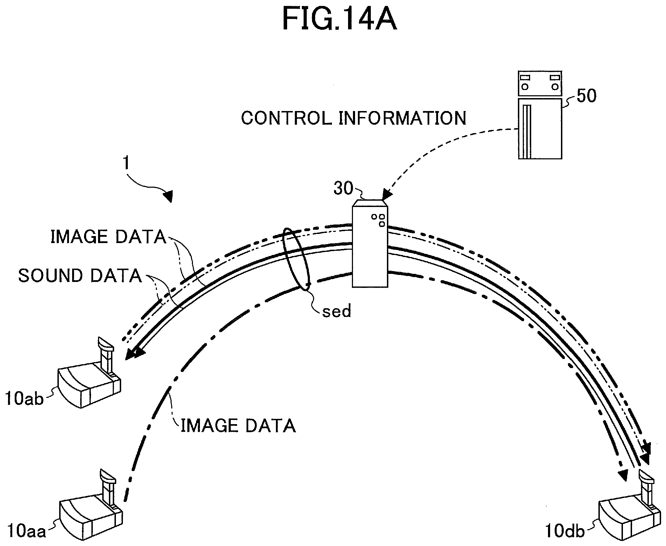

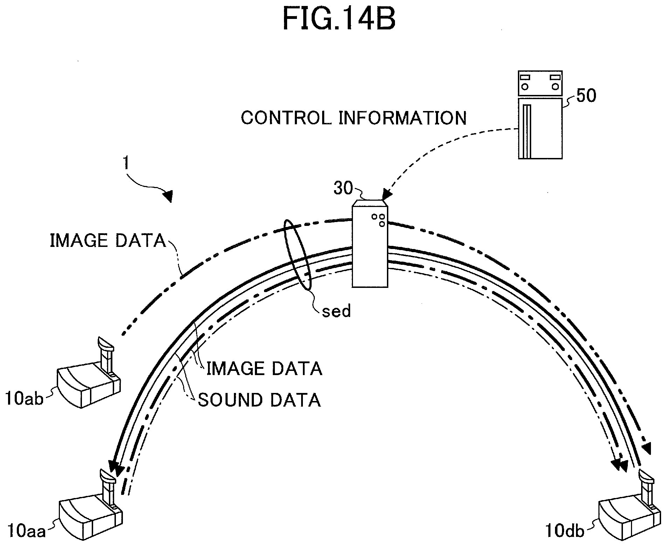

FIGS. 14A and 14B are schematic diagrams illustrating transmission and reception of various types of information in the communications system 1. As illustrated in FIG. 14B, at the time where the process of step S120 is completed, the relay apparatus 30 transmits the image data and the sound data received from one of the terminals (10aa and 10db) to the other one of the terminals (10db and 10aa). Further, the relay apparatus 30 transmits the image data received from the terminal 10ab to the terminal 10db. The conversation may be started between the users of the terminals (10aa and 10db) as a result. Moreover, when a new customer appears in the imaging range of the terminal 10ab, the operator who is the user of the terminal 10db may be able to grasp the situation of the new customer even when the operator of the terminal 10db is engaged in the conversation with the user of the terminal 10aa.

The manager 53 of the management system 50 manages the operating status "Online (in communications)" in association with the communications ID of the customer's terminal 10ab included in the end request information in the terminal management table (see FIG. 7B). In a part of step S121, the manager 53 manages the operating status "Online (engaged in a conversation)" in association with the communications ID of the switching destination terminal 10aa included in the terminal management table (see FIG. 7B). The storage-reader 59 deletes a record having the communications ID of the switching destination terminal 10aa from the terminal management table (see FIG. 7F) (step S122).

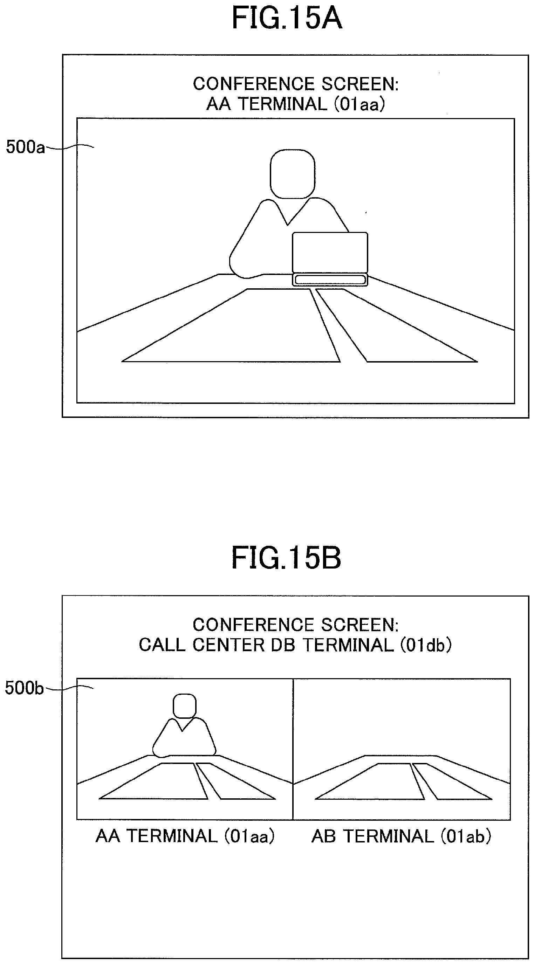

In the customer's terminal 10aa, the transmitter-receiver 21 receives the image data and the sound data transmitted from the operator's terminal 10db. The display controller 24 of the terminal 10aa outputs an image based on the received image data to the display 120aa (step S123). The speaker 115 outputs sound based on the received sound data. FIG. 15A is a diagram illustrating an example a videoconference screen of the terminal 10aa. The screen 500a displays an operator who is a user of the terminal 10db based on the image data transmitted from the terminal 10db.

The transmitter-receiver 21 of the operator's terminal 10db receives the image data and the sound data transmitted from the customer's terminal 10aa. In the operator's terminal 10db, the transmitter-receiver 21 receives the image data and the sound data transmitted from the customer's terminal 10aa. The display controller 24 of the terminal 10db outputs an image based on the received image data to the display 120db. The speaker 115 outputs sound based on the received sound data.

FIG. 15B is a diagram illustrating an example a videoconference screen of the terminal 10db. The screen 500b displays a customer who is a user of the terminal 10aa based on the image data transmitted from the terminal 10aa. The screen 500b also displays an image captured by the camera 112 of the terminal 10ab, based on the image transmitted from the terminal 10ab.

The operator is able to have a phone call conversation with the customer who is a user of the terminal 10aa, and simultaneously check a status of a new customer who desires to have a next phone call conversation with the operator when the new customer appears in the imaging range of the camera 112 of the terminal 10ab. For example, when a queue appears on the terminal 10ab side screen of the screen 500b, the operator may be able to acknowledge the situation where there are customers who are waiting for the conversation with the operators. When a person with a map appears on the terminal 10ab side screen of the screen 500b, the operator may expect to be queried for a direction to the destination in the next conversation. Further, when a person with a pamphlet of a certain language appears on the terminal 10ab side screen of the screen 500b, the operator may be able to anticipate receiving a question in the certain language in the next conversation.

The operator may thus be able to prepare for the next call communications, for example, finishing the current call quickly or changing the current call to another operator in accordance with the situation that may be obtained from the terminal 10ab side screen.

### EFFECTS OF EMBODIMENTS

The session controller 58 (an example of a transmission controller) of the management system 50 (an example of a transmission control system) controls a content data session sed for transmitting content data between a plurality of terminals 10aa, 10ab and 10db, such that content data are transmitted from one or more terminals 10aa and 10ab to a terminal 10db (an example of a first communications terminal) while content data are not transmitted from the terminal 10db to at least one terminal 10aa (an example of a second terminal) of the terminals 10aa and 10ab. The session controller 58 controls the session such that the content data are transmitted from the terminal 10db to the terminal 10aa, based on a request from the terminal 10aa. As a result, the content data are transmitted in two directions between the terminals 10aa and 10db so as to start a conversation between users of the terminals 10aa and 10db. The content data received from the terminal 10aa are transmitted to the terminal 10db before a conversation is started between the terminal 10aa and the terminal 10db. As a result, the terminal 10db is able to receive situational information of the terminal 10aa before the conversation is started between the terminal 10aa and the terminal 10db. As a result, the terminal 10db is able to prepare for the conversation in accordance with the situation of the terminal 10aa serving as a conversation request source.

The session controller 58 controls a content data session sed so as to transmit content data from the terminal 10db to one terminal 10ab (an example of a third terminal) of the plurality of the terminals (10aa and 10ab). The session controller 58 controls the content data session so as not to transmit the content data from the terminal 10db to the terminal 10ab and subsequently controls the content data session so as to transmit the content data from the terminal 10db to the terminal 10aa. As a result, it may be possible to prevent a content of the conversation between the terminals 10aa and 10db from being transmitted to the terminal 10ab via the content data session sed.

The operation input receiver 12 (an example of an operation input receiver) of the terminal 10db receives an input of a request to stop transmitting the content data from the terminal 10db to the terminal 10ab. The transmitter-receiver 11 (an example of a stop request transmitter) of the terminal 10db transmits the request to stop transmitting the content data after having received the input of the request.

The transmitter-receiver 51 (an example of a stop request receiver) of the management system 50 receives the request to stop transmitting the content data from the terminal 10db to the terminal 10ab. The session controller 58 controls the content data session so as not to transmit the content data from the terminal 10db to the terminal 10ab after the request to stop transmitting the content data from the terminal 10db to the terminal 10ab has been received. As a result, it may be possible to start a process of stopping transmitting the content data from the terminal 10db to the terminal 10ab and a process of starting transmitting content data from the terminal 10db to the terminal 10aa, upon reception of the request to stop transmitting the content data from the terminal 10db to the terminal 10ab as a trigger.

The transmitter-receiver 51 (an example of a transmission request receiver) of the management system 50 receives a request for transmitting content data from the terminal 10db to the terminal 10. The standby information management DB 5012 (an example of a reception manager) of the management system 50 manages a received order of the requests from request source terminals 10 by associating a received time at which each of the requests from the request source terminals 10 is received with a corresponding one of the communications IDs of the request source terminals 10. As a result, the session controller 58 is able to control the content data session sed so as to transmit the content data to the terminal 10 corresponding to the earlier one of the received requests in the received order, based on the received order managed by the standby information management DB 5012.

The session controller 58 controls the content data session sed so as to transmit content data from the one terminal 10aa of the plurality of the terminals (10aa and 10ab) to the terminal 10db. As a result, the session controller 58 may be able to prevent a conversation over the phone between the user (customer) of the terminal 10aa and the operator of the terminal 10db from being interfered with by the sound based on the sound data transmitted from the other terminal 10ab of the terminals (10aa and 10ab).

### SUPPLEMENTARY EXPLANATION

The management system 50 and the program providing system 90 in the embodiments described above may be constructed by a single computer, or may be constructed by multiple computers to which components (functions and units) of the transmission management system 50 and the program providing system 90 are separately assigned. In a case where the program providing system 90 is constructed by a single computer, the programs transmitted by the program providing system 90 may be divided into multiple modules, or the programs may be transmitted without being divided into multiple modules. Further, in a case where the program providing system 90 is constructed by multiple computers, the programs may be divided into multiple modules and the multiple modules of the programs are separately assigned to the computers, such that the multiple modules of the programs may be transmitted from the respective computers.

Moreover, any one of the recording medium storing the terminal program, the relay apparatus program and the communications management program of the communications system 1, the HD 204 storing the above-described programs, and the program providing system 90 provided with the HD 204 are used for providing users with the terminal program, the relay apparatus program and the communications management program domestically or internationally as program products.

The above-described communications system 1 manages, but not limited to, the IP addresses of the terminals in the terminal management table illustrated in FIG. 7B. The communications system 1 may manage fully qualified domain names (FQDN) of the terminals in a case where terminal identifier information for identifying the terminals 10 is used over the communications network 2. In this case, the IP address corresponding to FQDN is acquired by a known domain name system (DNS) server.

In the communications system 1, the "videoconferencing" may be interchangeably used with "teleconferencing".

Further, the communication system 1 in the above embodiment is illustrated as an example of the videoconferencing system; however, the communication system is not limited to the videoconferencing system. The communication system may be a car navigation system. In this case, one of the terminals 10 corresponds to a car navigation apparatus installed on a vehicle, and the other one of the terminals 10 corresponds to a management server or a management terminal in a management center that manages navigation of the car, or another car navigation apparatus installed on another vehicle.

In addition, the communication system 1 may be a audio conferencing system, or a personal computer (PC) screen sharing system. The communications system 1 may be a communications system of the Internet protocol (IP) phone, the internet phone, or a mobile phone. In this case, the terminal 10 corresponds to a phone apparatus such as a mobile phone apparatus.

The content data may include sound data such as pulse sound, heartbeats and the like generated inside the body, or data representing internal body information such as image data or coordinate data representing electrocardiogram waveforms or temperature changes. The communications system 1 having such a configuration illustrated the above may also be used as a remote medical system.

The above-described embodiments illustrate the image data and sound data as examples of content data. However, the content data are not necessarily limited to the image data and sound data. The content data may be tactile (touch) data. In this case, the sense of touch experienced by a user via one terminal is transmitted to the other terminal. Further, the content data may be olfactory (smell) data. In this case, the sense of smell (odor) detected by one terminal is transmitted to the other terminal. Moreover, the content data may at least be one of the image data, the sound data, the tactile data, the olfactory data, and the like.

Note that each of the terminals 10 may be used for a telephone conversation within the same room, a telephone conversation between indoor and outdoor, and a telephone conversation between outdoor and outdoor in addition to a telephone conversation between two or more offices, and a telephone conversation between different rooms within the same office. The terminals 10 used outdoor may perform telephone conversations via wireless communications such as a mobile communications network. The above-described embodiment is illustrated as an example of the communication system 1 that implements the videoconferencing. However, the example implemented by the communication system 1 is not limited to the videoconferencing. The example implemented by the communication system 1 may be used for presentation of general conversations between people such as family members or friends, or for presentation of one-way information.

### [Description of Reference Symbols]

- 10: communication terminal
- 11: transmitter-receiver
- 12: operation input receiver
- 13: display controller
- 19: storage-reader
- 21: transmitter-receiver
- 22: activator
- 24: display controller
- 25: function executor
- 29: storage-reader
- 30: relay apparatus
- 50: communication management system
- 51: transmitter-receiver
- 52: authenticator
- 53: manager
- 58: session controller
- 59: storage-reader
- 5000: storage
- 5001: authentication management DB
- 5002: terminal management DB
- 5003: application availability management DB
- 5005: session management DB
- 5010: group information management DB
- 5012: standby information management DB

## Claims

1. A transmission control system comprising:
a transmission controller configured to control transmission of content data in a session for transmitting the content data including image data and sound data between a plurality of communications terminals, the communications terminals including a first communications terminal, a second communications terminal and a third communications terminal,
wherein when the transmission controller controls the transmission of the content data so as not to transmit image data from the first communications terminal to the second communications terminal, but to transmit image data from the first communications terminal to the third communications terminal while transmitting image data from the second communications terminal to the first communications terminal, and transmitting image data from the third communications terminal to the first communications terminal, the transmission controller controls the transmission of the content data so as to transmit, based on a request transmitted from the second communications terminal, image data from the first communications terminal to the second communications terminal, but not to transmit image data from the first communications terminal to the third communications terminal while transmitting image data from the second communications terminal to the first communications terminal, and transmitting image data from the third communications terminal to the first communications terminal.

2. The transmission control system according to claim 1,
wherein when the transmission controller controls the transmission of the content data so as to transmit the image data from the first communications terminal to the third communications terminal, the transmission controller controls the transmission of the content data so as to transmit the image data from the first communications terminal to the second communications terminal after the transmission controller has controlled the transmission of the content data so as not to transmit the image data from the first communications terminal to the third communications terminal.

3. The transmission control system according to claim 2, further comprising:
a stop request receiver configured to receive a stop request to stop transmitting the image data from the first communications terminal to the third communications terminal,
wherein the content data controller controls the transmission of the content data so as not to transmit the image data from the first communications terminal to the third communications terminal after having received the stop request.

4. The transmission control system according to claim 2 or 3, further comprising:
a transmission request receiver configured to receive a transmission request to transmit the image data from the first communications terminal to one of the second communications terminal and the third communications terminal; and
a reception manager configured to manage a received order in which the requests received from the communications terminals are aligned in chronological order in association with the respective communications terminals,
wherein the transmission controller controls the transmission of the content data so as to transmit the image data to the communications terminal corresponding to an earlier one of the received requests in the received order, based on the received order managed by the reception manager.

5. The transmission control system according to any one of claims 1 to 4,
wherein the transmission controller controls the transmission of the content data to transmit the sound data from one of the second communications terminal and the third communications terminal to the first communications terminal.

6. A communications terminal comprising:
an input receiver configured to receive an input of a stop request to stop transmitting image data from a first communications terminal to a third communications terminal; and
a stop request transmitter configured to transmit, after the input has been received by the input receiver, the stop request to stop transmitting the image data to the transmission control system according to claim 3.

7. A communications system comprising:
the transmission control system according to any one of claims 1 to 5; and
the communications terminals.

8. A transmission control method comprising:
causing a transmission control system to control transmission of content data in a session for transmitting the content data including image data and sound data between a plurality of communications terminals, the communications terminals including a first communications terminal, a second communications terminal and a third communications terminal,
wherein when the transmission of the content data is controlled so as not to transmit image data from the first communications terminal to the second communications terminal, but to transmit image data from the first communications terminal to the third communications terminal while transmitting image data from the second communications terminal to the first communications terminal, and transmitting image data from the third communications terminal to the first communications terminal, the transmission of the content data is controlled so as to transmit, based on a request transmitted from the second communications terminal, image data from the first communications terminal to the second communications terminal, but not to transmit image data from the first communications terminal to the third communications terminal while transmitting image data from the second communications terminal to the first communications terminal, and transmitting image data from the third communications terminal to the first communications terminal.

9. The transmission control method according to claim 8, further comprising:
causing the first communications terminal to transmit to the transmission control system(50) a stop request to stop transmitting the image data from the first communications terminal to the third communications terminal; and
causing the transmission control system to control the transmission of the content data so as not to transmit the image data from the first communications terminal to the third communications terminal based on the stop request received from the first communications terminal.

10. A program for implementing components of the transmission control system according to any one of claims 1 to 5.

## Patentansprüche

1. Übertragungssteuersystem, umfassend:
eine Übertragungssteuerung, die konfiguriert ist, eine Übertragung von Inhaltsdaten in einer Sitzung zum Übertragen der Inhaltsdaten, einschließlich Bilddaten und Tondaten, zwischen einer Vielzahl von Kommunikationsendgeräten zu steuern, wobei die Kommunikationsendgeräte ein erstes Kommunikationsendgerät, ein zweites Kommunikationsendgerät und ein drittes Kommunikationsendgerät beinhalten,
wobei, wenn die Übertragungssteuerung die Übertragung der Inhaltsdaten steuert, um Bilddaten nicht von dem ersten Kommunikationsendgerät an das zweite Kommunikationsendgerät zu übertragen, aber Bilddaten von dem ersten Kommunikationsendgerät an das dritte Kommunikationsendgerät zu übertragen, während Bilddaten von dem zweiten Kommunikationsendgerät an das erste Kommunikationsgerät übertragen werden und Bilddaten von dem dritten Kommunikationsendgerät an das erste Kommunikationsendgerät übertragen werden, die Übertragungssteuerung die Übertragung der Inhaltsdaten steuert, um basierend auf einer von dem zweiten Kommunikationsendgerät übertragenen Anforderung Bilddaten von dem ersten Kommunikationsendgerät an das zweite Kommunikationsendgerät zu übertragen, aber Bilddaten nicht von dem ersten Kommunikationsendgerät an das dritte Kommunikationsendgerät zu übertragen, während Bilddaten von dem zweiten Kommunikationsendgerät an das erste Kommunikationsendgerät übertragen werden und Bilddaten von dem dritten Kommunikationsendgerät an das erste Kommunikationsendgerät übertragen werden.

2. Übertragungssteuersystem nach Anspruch 1,
wobei, wenn die Übertragungssteuerung die Übertragung der Inhaltsdaten steuert, um die Bilddaten von dem ersten Kommunikationsendgerät an das dritte Kommunikationsendgerät zu übertragen, die Übertragungssteuerung die Übertragung der Inhaltsdaten steuert, um die Bilddaten von dem ersten Kommunikationsendgerät an das zweite Kommunikationsendgerät zu übertragen, nachdem die Übertragungssteuerung die Übertragung der Inhaltsdaten gesteuert hat, um die Bilddaten nicht von dem ersten Kommunikationsendgerät an das dritte Kommunikationsendgerät zu übertragen.

3. Übertragungssteuersystem nach Anspruch 2, ferner umfassend:
einen Stoppanforderungsempfänger, der konfiguriert ist, eine Stoppanforderung zum Stoppen des Übertragens der Bilddaten von dem ersten Kommunikationsendgerät an das dritte Kommunikationsendgerät zu empfangen,
wobei die Inhaltsdatensteuerung die Übertragung der Inhaltsdaten steuert, um die Bilddaten nicht von dem ersten Kommunikationsendgerät an das dritte Kommunikationsendgerät zu übertragen, nachdem sie die Stoppanforderung empfangen hat.

4. Übertragungssteuersystem nach Anspruch 2 oder 3, ferner umfassend:
einen Übertragungsanforderungsempfänger, der konfiguriert ist, eine Übertragungsanforderung zum Übertragen der Bilddaten von dem ersten Kommunikationsendgerät an eines aus dem zweiten Kommunikationsendgerät und dem dritten Kommunikationsendgerät zu empfangen; und
einen Empfangsmanager, der konfiguriert ist, eine empfangene Reihenfolge zu verwalten, in der die von den Kommunikationsendgeräten empfangenen Anforderungen in chronologischer Reihenfolge in Verbindung mit den jeweiligen Kommunikationsendgeräten ausgerichtet sind,
wobei die Übertragungssteuerung die Übertragung der Inhaltsdaten steuert, um die Bilddaten an das Kommunikationsendgerät entsprechend einer früheren der empfangenen Anforderungen in der empfangenen Reihenfolge basierend auf der von dem Empfangsmanager verwalteten empfangenen Reihenfolge zu übertragen.

5. Übertragungssteuersystem nach einem der Ansprüche 1 bis 4,
wobei die Übertragungssteuerung die Übertragung der Inhaltsdaten steuert, um die Tondaten von einem aus dem zweiten Kommunikationsendgerät und dem dritten Kommunikationsendgerät an das erste Kommunikationsendgerät zu übertragen.

6. Kommunikationsendgerät, umfassend:
einen Eingabeempfänger, der konfiguriert ist, eine Eingabe einer Stoppanforderung zum Stoppen des Übertragens von Bilddaten von einem ersten Kommunikationsendgerät an ein drittes Kommunikationsendgerät zu empfangen; und
einen Stoppanforderungssender, der konfiguriert ist, nachdem die Eingabe von dem Eingabeempfänger empfangen wurde, die Stoppanforderung zum Stoppen des Übertragens der Bilddaten an das Übertragungssteuersystem nach Anspruch 3 zu übertragen.

7. Kommunikationssystem, umfassend:
das Übertragungssteuersystem nach einem der Ansprüche 1 bis 5; und
die Kommunikationsendgeräte.

8. Übertragungssteuerverfahren, umfassend:
Veranlassen eines Übertragungssteuersystems, eine Übertragung von Inhaltsdaten in einer Sitzung zum Übertragen der Inhaltsdaten, einschließlich Bilddaten und Tondaten, zwischen einer Vielzahl von Kommunikationsendgeräten zu steuern, wobei die Kommunikationsendgeräte ein erstes Kommunikationsendgerät, ein zweites Kommunikationsendgerät und ein drittes Kommunikationsendgerät beinhalten,
wobei, wenn die Übertragung der Inhaltsdaten gesteuert ist, um Bilddaten nicht von dem ersten Kommunikationsendgerät an das zweite Kommunikationsendgerät zu übertragen, aber Bilddaten von dem ersten Kommunikationsendgerät an das dritte Kommunikationsendgerät zu übertragen, während Bilddaten von dem zweiten Kommunikationsendgerät an das erste Kommunikationsgerät übertragen werden und Bilddaten von dem dritten Kommunikationsendgerät an das erste Kommunikationsendgerät übertragen werden, die Übertragung der Inhaltsdaten gesteuert wird, um basierend auf einer von dem zweiten Kommunikationsendgerät übertragenen Anforderung Bilddaten von dem ersten Kommunikationsendgerät an das zweite Kommunikationsendgerät zu übertragen, aber Bilddaten nicht von dem ersten Kommunikationsendgerät an das dritte Kommunikationsendgerät zu übertragen, während Bilddaten von dem zweiten Kommunikationsendgerät an das erste Kommunikationsendgerät übertragen werden und Bilddaten von dem dritten Kommunikationsendgerät an das erste Kommunikationsendgerät übertragen werden.

9. Übertragungssteuerverfahren nach Anspruch 8, ferner umfassend:
Veranlassen des ersten Kommunikationsendgeräts, eine Stoppanforderung zum Stoppen des Übertragens der Bilddaten von dem ersten Kommunikationsendgerät an das dritte Kommunikationsendgerät an das Übertragungssteuersystem (50) zu übertragen; und
Veranlassen des Übertragungssteuersystems, die Übertragung der Inhaltsdaten zu steuern, um basierend auf der von dem ersten Kommunikationsendgerät empfangenen Stoppanforderung die Bilddaten nicht von dem ersten Kommunikationsendgerät an das dritte Kommunikationsendgerät zu übertragen.

10. Programm zum Implementieren von Komponenten des Übertragungssteuersystems nach einem der Ansprüche 1 bis 5.

## Revendications

1. Système de commande d'émission comprenant :
un dispositif de commande d'émission conçu pour commander l'émission de données de contenu dans une session destinée à émettre les données de contenu comprenant des données image et des données sonores entre une pluralité de terminaux de communications, les terminaux de communications comprenant un premier terminal de communications, un deuxième terminal de communications et un troisième terminal de communications,
lorsque le dispositif de commande d'émission commande l'émission des données de contenu de manière à ne pas émettre les données image du premier terminal de communications au deuxième terminal de communications, mais à émettre des données image du premier terminal de communications au troisième terminal de communications tout en émettant des données image du deuxième terminal de communications au premier terminal de communications, et en émettant des données image du troisième terminal de communications au premier terminal de communications, le dispositif de commande d'émission commandant l'émission des données de contenu de manière à émettre, en fonction d'une demande émise depuis le deuxième terminal de communications, des données image du premier terminal de communications au deuxième terminal de communications, mais à ne pas émettre des données image du premier terminal de communications au troisième terminal de communications tout en émettant des donnés image du deuxième terminal de communications au premier terminal de communications, et en émettant des données image du troisième terminal de communications au premier terminal de communications.

2. Système de commande d'émission selon la revendication 1,
dans lequel lorsque le dispositif de commande d'émission commande l'émission des données de contenu de manière à émettre les données image du premier terminal de communications au troisième terminal de communications, le dispositif de commande d'émission commande l'émission des données de contenu de manière à émettre les données image du premier terminal de communications au deuxième terminal de communications après que le dispositif de commande d'émission a commandé l'émission des données de contenu de manière à ne pas émettre les données image du premier terminal de communications au troisième terminal de communications.

3. Système de commande d'émission selon la revendication 2, comprenant en outre :
un récepteur de demande d'arrêt conçu pour recevoir une demande d'arrêt pour arrêter l'émission des données image du premier terminal de communications au troisième terminal de communications,
le dispositif de commande de données de contenu commandant l'émission des données de contenu de manière à ne pas émettre les données image du premier terminal de communications au troisième terminal de communications après avoir reçu la demande d'arrêt.

4. Système de commande d'émission selon la revendication 2 ou 3, comprenant en outre :
un récepteur de demande d'émission conçu pour recevoir une demande d'émission pour émettre les données image du premier terminal de communications au deuxième terminal de communications ou au troisième terminal de communications ; et
un gestionnaire de réception conçu pour gérer un ordre reçu dans lequel les demandes reçues depuis les terminaux de communications sont alignées dans l'ordre chronologique en association avec les terminaux de communications respectifs,
le dispositif de commande d'émission commandant l'émission des données de contenu de manière à émettre les données image vers le terminal de communications correspondant à une demande précédente parmi les demandes reçues dans l'ordre reçu, en fonction de l'ordre reçu géré par le gestionnaire de réception.

5. Système de commande d'émission selon l'une quelconque des revendications 1 à 4,
dans lequel le dispositif de commande d'émission commande l'émission des données de contenu pour émettre les données sonores du deuxième terminal de communications ou du troisième terminal de communications au premier terminal de communications.

6. Terminal de communications comprenant :
un récepteur d'entrée conçu pour recevoir une entrée d'une demande d'arrêt pour arrêter l'émission des données image d'un premier terminal de communications à un troisième terminal de communications ; et
un émetteur de demande d'arrêt conçu pour émettre, après que l'entrée a été reçue par le récepteur d'entrée, la demande d'arrêt pour arrêter l'émission des données image au système de commande d'émission selon la revendication 3.

7. Système de communications comprenant :
le système de commande d'émission selon l'une quelconque des revendications 1 à 5 ; et
les terminaux de communications.

8. Procédé de commande d'émission comprenant :
le fait d'amener un système de commande d'émission à commander l'émission de données de contenu dans une session destinée à émettre les données de contenu comprenant des données image et des données sonores entre une pluralité de terminaux de communications, les terminaux de communications comprenant un premier terminal de communications, un deuxième terminal de communications et un troisième terminal de communications,
dans lequel lorsque l'émission des données de contenu est commandée de manière à ne pas émettre les données image du premier terminal de communications au deuxième terminal de communications, mais à émettre des données image du premier terminal de communications au troisième terminal de communications tout en émettant des données image du deuxième terminal de communications au premier terminal de communications, et en émettant des données image du troisième terminal de communications au premier terminal de communications, l'émission des données de contenu est commandée de manière à émettre, en fonction d'une demande émise depuis le deuxième terminal de communications, des données image du premier terminal de communications au deuxième terminal de communications, mais à ne pas émettre des données image du premier terminal de communications au troisième terminal de communications tout en émettant des données image du deuxième terminal de communications au premier terminal de communications, et en émettant des données image du troisième terminal de communications au premier terminal de communications.

9. Procédé de commande d'émission selon la revendication 8, comprenant en outre :
le fait d'amener le premier terminal de communications à émettre vers le système de commande d'émission (50) une demande d'arrêt pour arrêter l'émission des données image du premier terminal de communications au troisième terminal de communications ; et
le fait d'amener le système de commande d'émission à commander l'émission des données de contenu de manière à ne pas émettre les données image du premier terminal de communications au troisième terminal de communications en fonction de la demande d'arrêt reçue depuis le premier terminal de communications.

10. Programme destiné à mettre en place des composants du système de commande d'émission selon l'une quelconque des revendications 1 à 5.
